# EUROPÄISCHE PATENTSCHRIFT

(11) **EP 1 762 333 B1**
(45) Veröffentlichungstag und Bekanntmachung des Hinweises auf die Patenterteilung: **07.11.2007**
(21) Anmeldenummer: 06018308.4
(22) Anmeldetag: 01.09.2006
(51) Int. Cl.: B23Q 11/00, B01D 21/24

(54) **Vorrichtung zur Förderung von mit Spänen versetztem Kühlschmierstoff**
An apparatus for transporting cooling lubricants containing swarf
Dispositif pour le convoyage de fluide de refroidissement contenant des copeaux

(30) Priorität: 12.09.2005 DE 102005043515
(43) Veröffentlichungstag der Anmeldung: 14.03.2007
(73) Patentinhaber: Bürener Maschinenfabrik GmbH, 33142 Büren (DE)
(72) Erfinder: Habermehl, Karl Lothar, 35510 Butzbach-Griedel (DE)
(74) Vertreter: Henseler, Daniela

(56) Entgegenhaltungen:
- EP-A1- 1 195 223
- WO-A1-03/008149
- DE-A1- 10 244 012
- DE-B- 1 292 066
- DE-C1- 10 219 454
- US-A- 4 026 408

## Beschreibung

Die Erfindung betrifft eine Vorrichtung zur Förderung von mit Spänen versetztem Kühlschmierstoff.

Bei der spanenden Bearbeitung von Werkstoffen fallen neben den Kühlschmierstoffen Späne an, die einer Entsorgung zuzuführen sind. Dazu muß das Flüssigkeits-Feststoffgemisch von den Bearbeitungsmaschinen sicher und zuverlässig aufgenommen und abtransportiert werden. Man spricht insoweit auch von Rückpumpstationen. Die kleineren Späne, die zusammen mit dem Kühlschmierstoff rückgepumpt werden, um dann in einer Filteranlage abgetrennt zu werden, verlangen ein Räumersystem, das für einen sicheren Abtransport der Späne zusammen mit dem Kühlschmierstoff zu sorgen hat.

Aus DE 102 44 012 A1 ist eine Aufbereitungseinrichtung für Späne enthaltende Kühl- und Schmiermittel mit einem Sammelbehälter, dessen Bodenplatte aus zwei spiegelbildlich gegenüberliegenden Halbkreisbereichen und einem dazwischen liegenden Rechteckbereich zusammengesetzt ist, bekannt, wobei wenigstens ein Räumelement mit einem Befestigungselement an einer um zwei Kettenräder gespannten Förderkette befestigt ist und von der Förderkette geführt umläuft und dabei die Späne in den Bereich des Ansaugstutzens einer Transportpumpe fördert.

Aus DE 102 19 454 C1 ist eine Vorrichtung zur Förderung von mit Feststoffrückständen versetztem Kühlschmierstoff bekannt, die einen zylindrischen Topf umfaßt, in dem mindestens ein spiralabschnittförmig gekrümmter Räumerarm umläuft. Die Feststoffrückstände brauchen nur kurze Wege zu gehen, bevor sie abtransportiert werden. Ein flach bauender Topf ist deshalb wegen des schnellen Abtransports der Feststoffrückstände hinreichend. Erforderlich ist jedoch die Verwendung eines runden Topfes, wodurch das Einsatzgebiet beschränkt ist.

Aus EP 1 195 223 B1 ist eine Vorrichtung zur Förderung von mit Spänen versetztem Kühlschmierstoff bekannt, bei der der Behälter eckig ausgestaltet sein kann. Der mindestens eine Räumerarm ist an einem Zugmittel angeordnet, mit dem er bewegt werden kann. Der Räumerarm wird im Bereich der Behälterwandung geführt. Aufgrund der Schwerkraft wird der Räumerarm während seiner horizontalen Bewegung am Behälterboden gehalten und schiebt die Späne einer Austrageinrichtung zu. Als nachteilig erwiesen hat sich, daß es je nach Art der Späne zu unerwünschten Ablagerungen im Behälter kommt.

Aufgabe der Erfindung ist es daher, eine Vorrichtung zur Förderung von mit Spänen versetztem Kühlschmierstoff zu schaffen, die ein wartungsarmes Abtransportieren von mit Feststoffrückständen, insbesondere Spänen, versetztem Kühlschmierstoff erlaubt und die räumlichen Verhältnisse bei Bearbeitungsmaschinen nutzt.

Diese Aufgabe wird durch die Merkmale des Anspruchs 1 gelöst.

Hierdurch wird eine Vorrichtung geschaffen, die den Transport der Feststoffrückstände, insbesondere der Späne, mit dem Kühlschmierstoff durch ein schnelles und im wesentlichen vollständiges Schieben der auf dem Behälterboden befindlichen Feststoffrückstände zu einer Austragvorrichtung vereinfacht. Eine niedrige Bauhöhe kann auch bei hohen Mengen an anfallendem Kühlschmierstoff realisiert werden, da im Gegensatz zu einem runden Behälter die Längsseiten des Behälters variiert werden können und damit das Fassungsvermögen, ohne die Funktionalität der Vorrichtung zu verändern. Eine Anpassung an die räumlichen Verhältnisse bei der Fertigung als auch eine optimale Nutzung der räumlichen Gegebenheiten ist dadurch möglich.

Den mindestens einen Räumerarm auf einer stadionartigen Laufbahn umlaufen zu lassen, führt in Verbindung mit einer Laufsteuerung des mindestens einen Räumerarms an einer Innenführung unter Ausbildung desselben als Eingriffsglied mit einem Berührungsprofil, das selbst einen Kurvenabschnitt aufweist, zu einem zuverlässigen Vorschub der Späne auf dem Behälterboden. Ablagerungen auf dem Behälterboden und/oder Totecken lassen sich auf diese Weise vermeiden.

Die Form des mindestens einen Räumerarms ist wählbar. Bevorzugt sind schaufelartig gebildete Räumerarme, die die Späne zusammenführen.

Die Anzahl der Räumerarme ist wählbar und richtet sich nach Art und Anfallmenge der Späne.

Die Innenführung weist vorzugsweise halbkreisförmige Enden auf, die an die halbkreisförmigen Abschlüsse der Laufbahn angepaßt sind. Der mindestens eine Räumerarm kann dann beim Umlaufen auch im Kurvenbereich bis an eine Wandung des Behälters reichen.

Der vorzugsweise unter seiner Schwerkraft auf dem Behälterboden aufliegende mindestens eine Räumerarm besitzt vorzugsweise eine Unterseite, die einen oder mehrere vorstehende Stege, insbesondere eine Vorderleiste, aufweist. Der Räumerarm hat dann nur eine linienförmige Auflage auf dem Behälterboden. Der Räumerarm neigt dann weniger dazu, sich an oder in den Spänen festzufahren. Ferner kann eine leichte Anhebbarkeit des mindestens einen Räumerarms über ein Hubspiel bei der Verbindung des Räumerarms an dem Zugmittel vorgesehen sein, die ein Freifahren des Räumerarms aus Spänehaufen ermöglicht.

Ein Abstreifer kann an dem mindestens einen Räumerarm vorgesehen sein, der die Innenführung beim Umlaufen gleich mit reinigt.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
Fig. 1 zeigt schematisch eine perspektivische Ansicht einer Vorrichtung zur Förderung von mit Spänen versetztem Kühlschmierstoff,
Fig. 2 zeigt schematisch eine Draufsicht ohne Abdeckung,
Fig. 3 zeigt schematisch eine Seitensicht ohne Behälterwandung,
Fig. 4 zeigt schematische eine Detailansicht einer Führung des Räumerarms in verschiedenen Positionen,
Fig. 4-1 bis 4-7 zeigen die verschiedenen Positionen aus Fig. 4 in Einzeldarstellungen.

Die Erfindung betrifft eine Vorrichtung 1 zur Förderung von mit Feststoffrückständen aus der metallverarbeitenden Industrie, insbesondere Spänen, versetztem Kühlschmierstoff für einen Abtransport von einer Bearbeitungsmaschine.

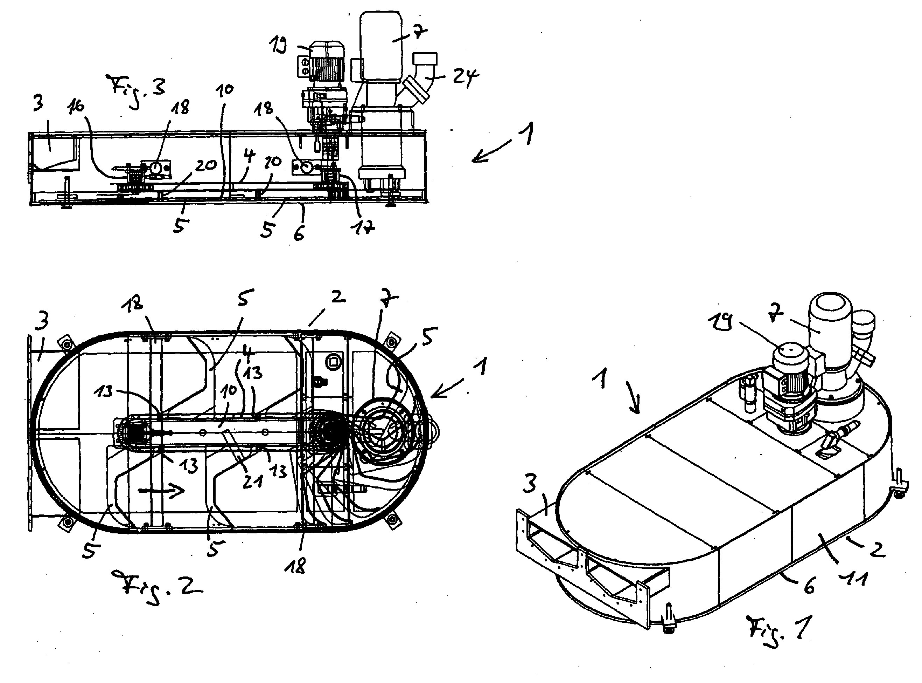

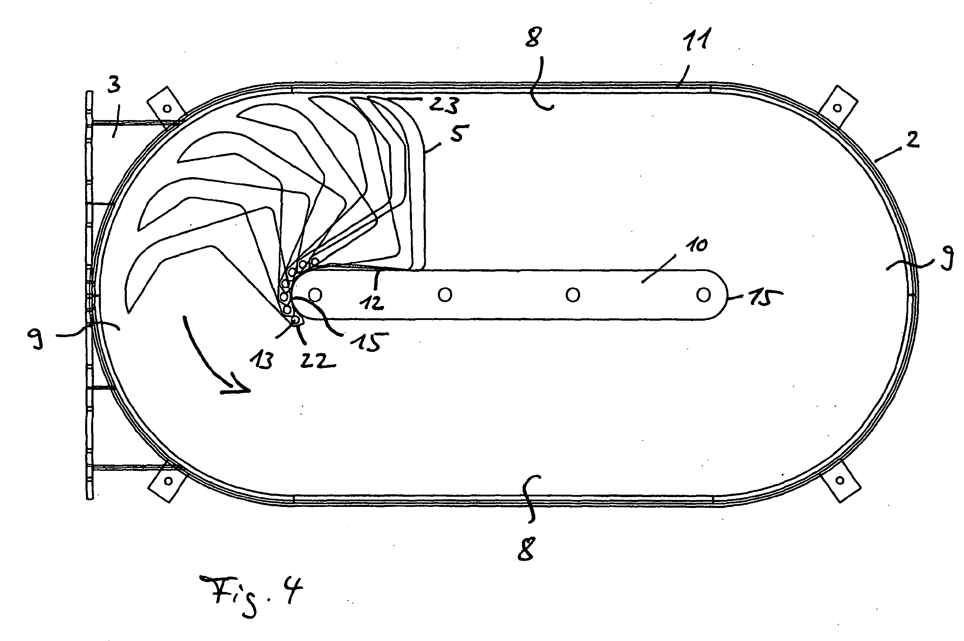

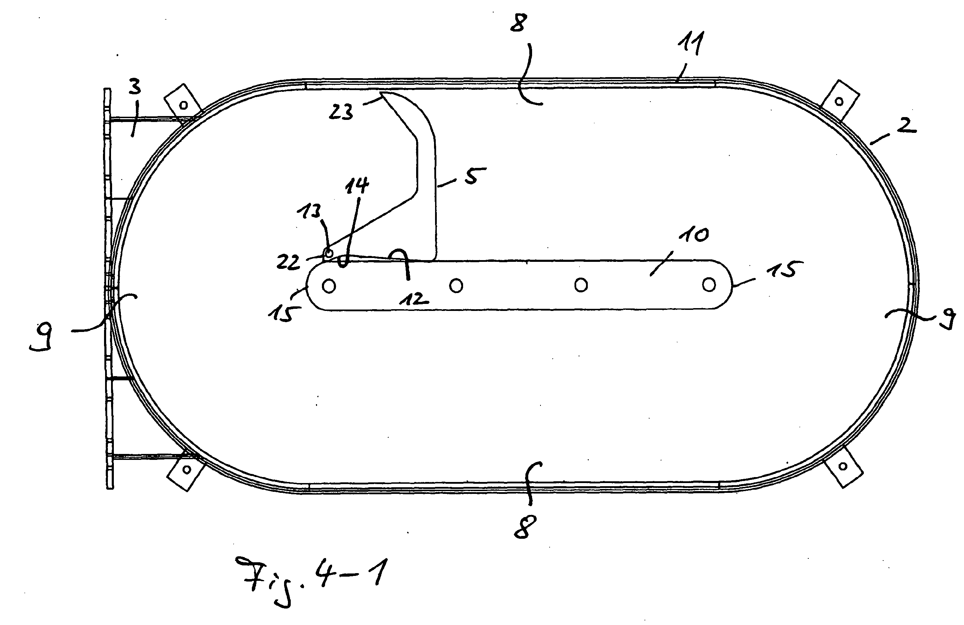

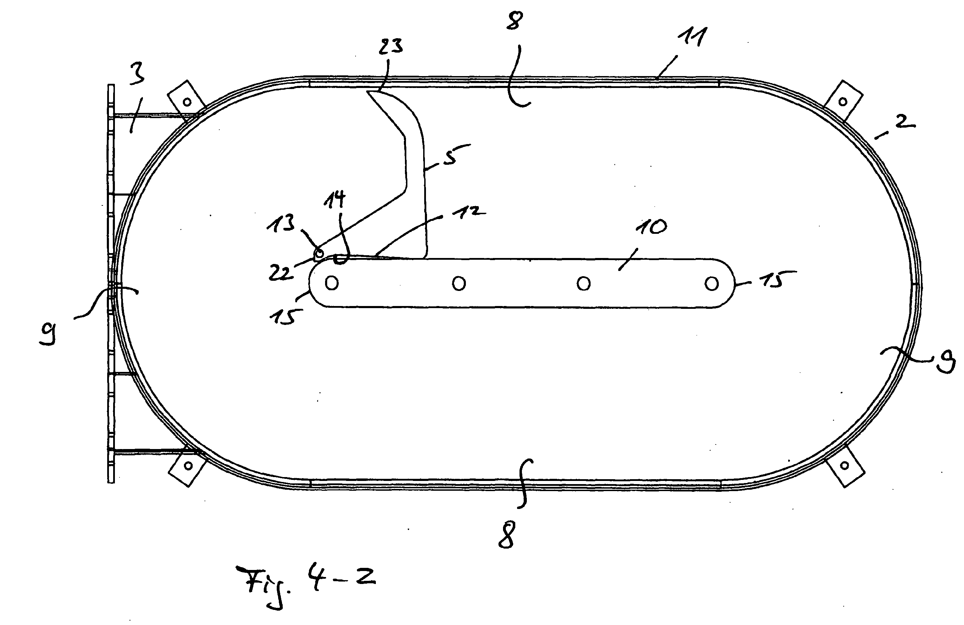

Wie die Fig. 1 bis 3 zeigen, umfaßt die Vorrichtung 1 einen Behälter 2, der mindestens einen Einlaß 3 aufweist. In dem Behälter 2 läuft mindestens ein an einem Zugmittel 4 angeordneter Räumerarm 5 um. Dieser mindestens eine Räumerarm 5 führt die auf einem ebenen Behälterboden 6 befindlichen Späne einer Austrageinrichtung zu, die hier von mindestens einer Transportpumpe 7 gebildet wird. Alternativ zur einer Transportpumpe kann ein Stutzen für eine Trockenabsaugung vorgesehen sein.

Der mindestens eine Räumerarm 5 läuft auf einer stadionartigen Laufbahn mit Längsseiten 8 und halbkreisförmigen Abschlüssen 9 um eine Innenführung 10. Die Laufbahn befindet sich auf dem Behälterboden 6 und wird vorzugsweise von der Umfangswandung 11 des Behälters 2 begrenzt. Alternativ kann die Laufbahn von einem Behältereinsatz umfänglich begrenzt werden.

An der Innenführung 10 stützt sich der von dem Zugmittel 4 gezogene mindestens eine Räumerarm 5 mit einer Räumerarmflanke 12 als drehbar gelagertes Eingriffsglied ab. Die Räumerarmflanke 12 weist laufabwärts der Lagerung 13 einen bogenförmigen Abschnitt 14 auf, der an eine Krümmung halbkreisförmiger Enden 15 der Innenführung 10 angepaßt ist. Die Innenführung 10 ist zentral im Behälter angeordnet und besitzt halbkreisförmige Enden 15, die vorzugsweise koaxial zu den halbkreisförmigen Abschlüssen 9 der Laufbahn angeordnet sind. Die Innenführung 10 stellt eine umlaufende Wand zur Verfügung, an der der mindestens eine Räumerarm 5, abgestützt durch seine Räumerarmflanke 12, von dem Zugmittel 4 entlang gezogen wird. Eine geringe Wandhöhe der Innenführung 10 reicht, so daß diese Innenführung 10 flachbauend ist. Um die Innenführung 10 von Spänen zu reinigen, kann ein Abstreifer 21 an einem Räumerarm 5 vorgesehen sein, der mit diesem umläuft.

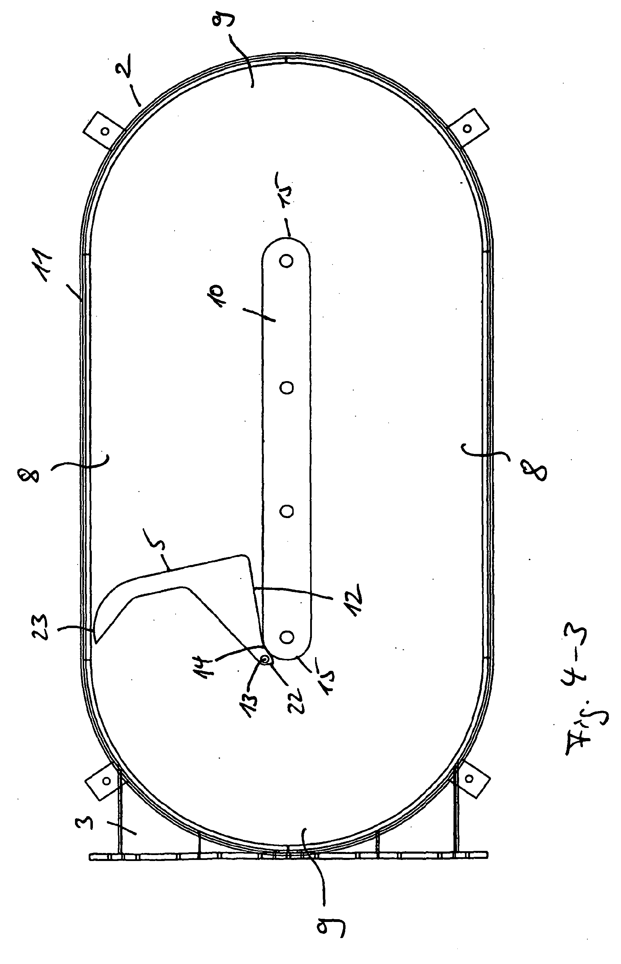

Der Räumerarm 5 ist vorzugsweise schaufelartig ausgebildet. Mehrere Räumerarme 5 sind vorzugsweise mit Abstand zueinander an dem Zugmittel 4 befestigt. Das Zugmittel 4 ist vorzugsweise eine Kette, die über der Innenführung 10 und ausgerichtet zu dieser angeordnet ist, um den oder die Räumerarme um die Innenführung 10 laufen zu lassen. Das Zugmittel 4 umfaßt dazu eine Umlenkeinheit 16 und eine Anschlußeinheit 17 für den Antriebsmotor 19, die an Halterungen 18 befestigbar sind. Gemäß Fig. 3 läuft das Zugmittel 4 mit Abstand über dem Behälterboden 6. Zum Verbinden des oder der Räumerarme 5 mit dem Zugmittel 4 weist dieses quer zur Vorschubrichtung vorstehende Verbindungszapfen 20 auf, die in eine Lagerungshülse der Lagerung 13 am Räumerarm 5 eingreifen. Eine solche Verbindung erlaubt die Einstellung eines Hubspiels des Räumerarms 5, damit sich dieser gegenüber dem Behälterboden 6 zumindest geringfügig anheben kann.

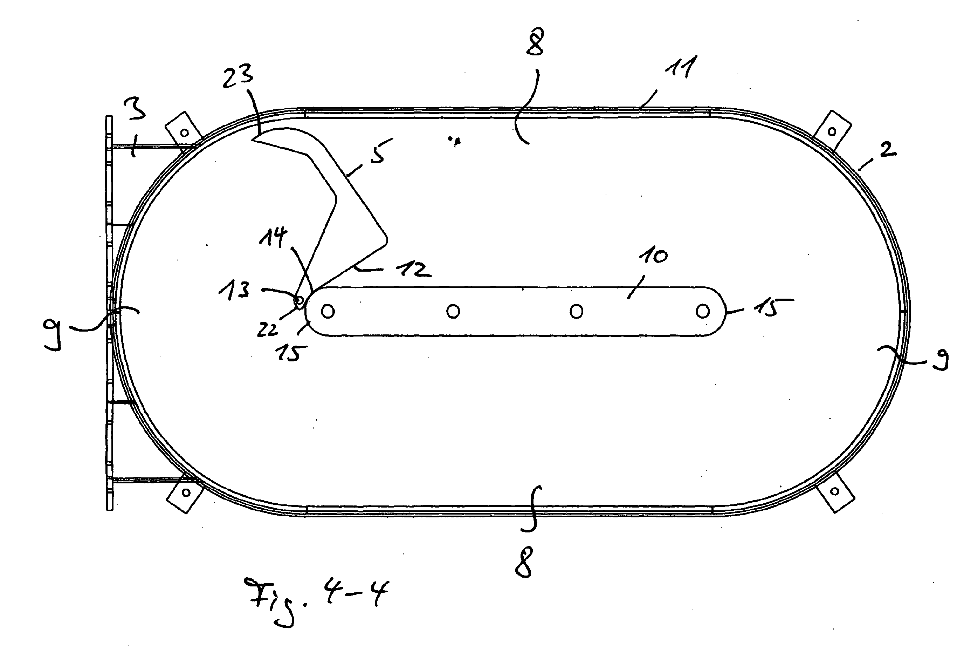

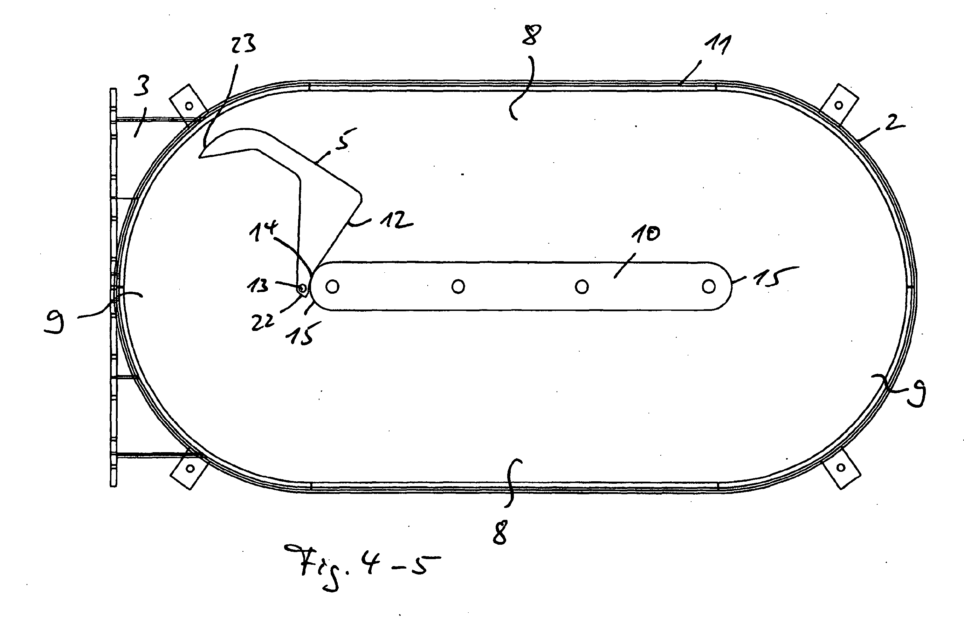

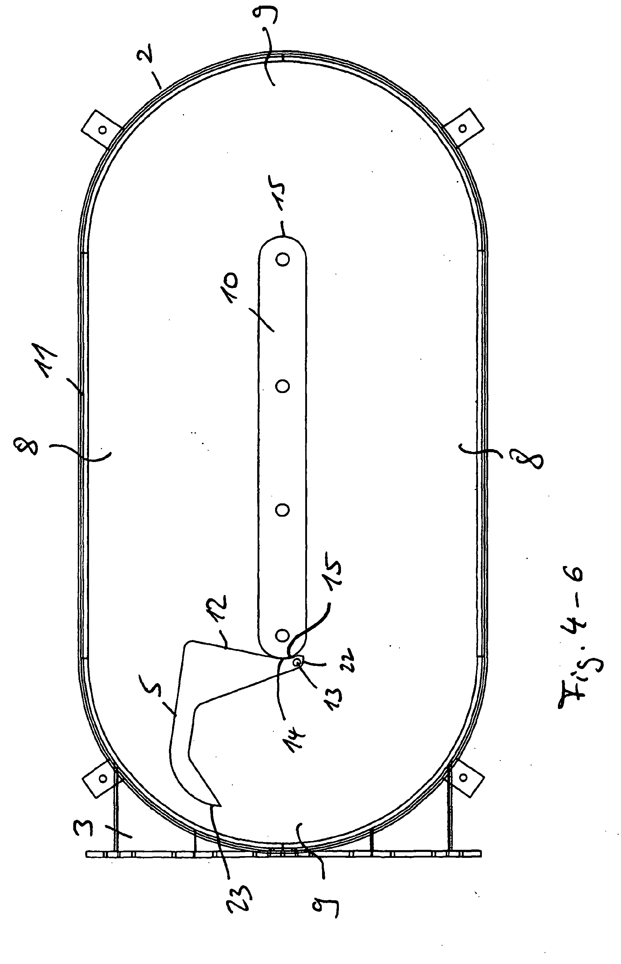

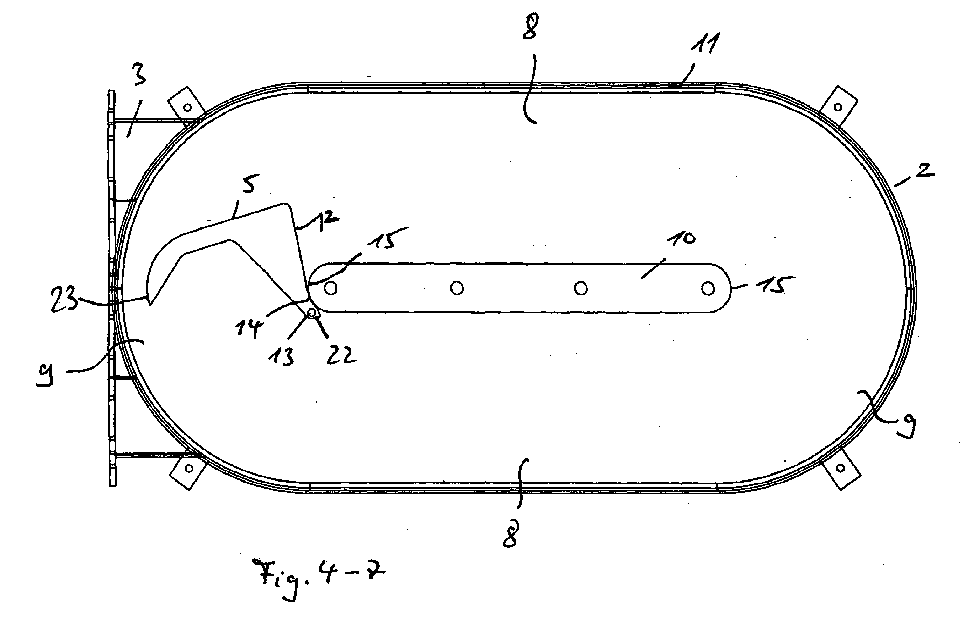

Der mindestens eine Räumerarm 5 besitzt eine Räumerarmflanke 12, die in Laufrichtung (vgl. Pfeil) vorne an einem inneren Räumerarmende 22 die Lagerung 13 für die Verbindung mit dem Zugmittel 4 aufweist, über die der Räumerarm 5 drehbeweglich mit dem Zugmittel 4 verbindbar ist. Laufabwärts der Lagerung 13 befindet sich der bogenförmige Abschnitt 14. Die Wirkung des bogenförmigen Abschnitts 14 auf die gelenkte Führung des Räumerarms 5 in den halbkreisförmigen Abschlüssen 9 der Laufbahn ist in einzelnen Schritten in den Fig. 4-1 bis 4-7 dargestellt.

Die Abmessungen des mindestens einen Räumerarms 5 sind so wählbar, daß dieser mit seinem äußeren Ende 23 bis an die Umfangswandung 11 des Behälters ragt, und zwar auf den Längsseiten 8 und/oder den halbkreisförmigen Abschlüssen 9 oder einen Restabstand hält wie in Fig. 4 dargestellt.

Der mindestens eine Räumerarm 5 kann für eine schmalflächige Auflage am Behälterboden 6 an seiner Unterseite mit einem oder mehreren vorstehenden Stegen ausgebildet sein, wobei besonders bevorzugt eine in Laufrichtung vorne angeordnete Leiste an der Unterseite vorgesehen ist.

Die Transportpumpe 7 ist vorzugsweise außermittig angeordnet, um unmittelbar über der Laufbahn, insbesondere im Bereich eines halbkreisförmigen Abschlusses 9, ansaugen zu können. Die Transportpumpe 7 ist vorzugsweise als Schlürf-Tauchpumpe ausgebildet. Für das abgesaugte Medium ist ein Auslaßstutzen 24 vorgesehen.

## Patentansprüche

1. Vorrichtung zur Förderung von mit Feststoffrückständen, insbesondere Spänen, versetztem Kühlschmierstoff mit einem mindestens einen Einlaß aufweisenden Behälter, in dem mindestens ein an einem Zugmittel angeordneter Räumarm (5) umläuft, der die auf einem ebenen Behälterboden befindlichen Späne einer Austrageinrichtung zuführt und auf einer stadionartigen Laufbahn mit Längsseiten (8) und halbkreisförmigen Abschlüssen (9) um eine Innenführung (10) läuft, **dadurch gekennzeichnet, daß** sich der gezogene mindestens eine Räumerarm (5) mit einer Räumerarmflanke (12) als drehbar gelagertes Eingriffsglied an der Innenführung (10) abstützt, und die Räumerarmflanke (12) laufabwärts der Lagerung (13) einen bogenförmigen Abschnitt (14) aufweist, der an eine Krümmung halbkreisförmiger Enden (15) der Innenführung (10) angepaßt ist.

2. Vorrichtung nach Anspruch 1, **dadurch gekennzeichnet, daß** der mindestens eine Räumerarm (5) schaufelartig ausgebildet ist.

3. Vorrichtung nach Anspruch 1 oder 2, **dadurch gekennzeichnet, daß** mehrere Räumerarme (5) vorgesehen sind, die beabstandet zueinander umlaufen.

4. Vorrichtung nach einem der Ansprüche 1 bis 3, **dadurch gekennzeichnet, daß** die halbkreisförmigen Enden (15) der Innenführung (10) koaxial zu den halbkreisförmigen Abschlüssen (9) der Laufbahn angeordnet sind.

5. Vorrichtung nach einem der Ansprüche 1 bis 4, **dadurch gekennzeichnet, daß** die Laufbahn seitlich begrenzt ist durch die Umfangswandung (11) des Behälters (2).

6. Vorrichtung nach einem der Ansprüche 1 bis 5, **dadurch gekennzeichnet, daß** der mindestens eine Räumerarm (5) für eine schmalflächige Auflage am Behälterboden (6) an seiner Unterseite mit einem oder mehreren vorstehenden Stegen ausgebildet ist.

7. Vorrichtung nach Anspruch 6, **dadurch gekennzeichnet, daß** der mindestens eine Räumerarm (5) eine in Laufrichtung vorne angeordnete Leiste an einer Unterseite aufweist.

8. Vorrichtung nach einem der Ansprüche 1 bis 7, **dadurch gekennzeichnet, daß** der mindestens eine Räumerarm (5) eine Ausladung aufweist, daß der Räumerarm (5) mit einem äußeren Ende (23) benachbart zu einer Umfangswandung (11) des Behälters (2) umläuft.

9. Vorrichtung nach einem der Ansprüche 1 bis 8, **dadurch gekennzeichnet, daß** der mindestens eine Räumerarm (5) einen Abstreifer (21) aufweist, der als Schaber über die Innenführung (10) verfahrbar ist.

10. Vorrichtung nach einem der Ansprüche 1 bis 9, **dadurch gekennzeichnet, daß** das Zugmittel (4) oberhalb der Innenführung (10) umläuft.

11. Vorrichtung nach einem der Ansprüche 1 bis 10, **dadurch gekennzeichnet, daß** der mindestens eine Räumerarm (5) in Laufrichtung vorne an einem inneren Räumerarmende (22) die Lagerung (13) aufweist, über die der Räumerarm (5) drehbeweglich mit dem Zugmittel (4) verbindbar ist.

12. Vorrichtung nach Anspruch 11, **dadurch gekennzeichnet, daß** die Lagerung (13) den Räumerarm (5) mit einem Hubspiel gegenüber dem Behälterboden (6) unter Schwerkraft lagert.

13. Vorrichtung nach einem der Ansprüche 1 bis 12, **dadurch gekennzeichnet, daß** das Zugmittel (4) eine Kette ist, die über eine Halterung (18) als zentral geführte Kette mit Umlenkung und Antriebsmotor (19) als Stetigförderer für den mindestens einen Räumerarm (5) ausgebildet ist.

14. Vorrichtung nach einem der Ansprüche 1 bis 13, **dadurch gekennzeichnet, daß** mindestens eine Transportpumpe außermittig angeordnet ist.

15. Vorrichtung nach einem der Ansprüche 1 bis 14, **dadurch gekennzeichnet, daß** mindestens eine Transportpumpe (7) im Bereich eines halbkreisförmigen Abschlusses (9) angeordnet ist.

16. Vorrichtung nach Anspruch 15, **dadurch gekennzeichnet, daß** die mindestens eine Transportpumpe (7) als Schlürf-Tauchpumpe ausgebildet ist.

17. Vorrichtung nach einem der Ansprüche 1 bis 13, **dadurch gekennzeichnet, daß** als Austrageinrichtung ein Stutzen für eine Trockenabsaugung vorgesehen ist.

18. Vorrichtung nach einem der Ansprüche 1 bis 17, **dadurch gekennzeichnet, daß** der mindestens eine Einlaß (3) in Verlängerung einer Längsseite oberhalb des Behälterbodens (6) eintritt.

## Claims

1. Apparatus for transporting cooling lubricant containing solid residues, in particular swarf, comprising a container which has at least one inlet and in which at least one clearing arm (5) revolves which is arranged on a pulling means and which feeds the swarf located on a flat container base to a discharge device and runs around an inner guide (10) on a stadium-like track having longitudinal sides (8) and semicircular end pieces (9), **characterized in that** the at least one pulled clearing arm (5) is supported on said inner guide (10) with a clearing-arm flank (12) as rotatably mounted engagement element, and the clearing-arm flank (12) has a curved section (14) downstream of the mounting (13) in the running direction, said section (14) being adapted to a curvature of semicircular ends (15) of the inner guide (10).

2. Apparatus according to Claim 1, **characterized in that** the at least one clearing arm (5) is of bucket-like design.

3. Apparatus according to Claim 1 or 2, **characterized in that** a plurality of clearing arms (5) which revolve at a distance apart are provided.

4. Apparatus according to one of Claims 1 to 3, **characterized in that** the semicircular ends (15) of the inner guide (10) are arranged coaxially to the semicircular end pieces (9) of the track.

5. Apparatus according to one of Claims 1 to 4, **characterized in that** the track is laterally defined by the circumferential wall (11) of the container (2).

6. Apparatus according to one of Claims 1 to 5, **characterized in that** the at least one clearing arm (5) is formed on its underside with one or more projecting webs for resting on the container base (6) over a narrow area.

7. Apparatus according to Claim 6, **characterized in that** the at least one clearing arm (5) has a strip on an underside, said strip being arranged at the front in the running direction.

8. Apparatus according to one of Claims 1 to 7, **characterized in that** the at least one clearing arm (5) has a working radius, such that the clearing arm (5) revolves with an outer end (23) adjacent to a circumferential wall (11) of the container (2).

9. Apparatus according to one of Claims 1 to 8, **characterized in that** the at least one clearing arm (6) has a wiper (21) which can be moved as a scraper over the inner guide (10).

10. Apparatus according to one of Claims 1 to 9, **characterized in that** the pulling means (4) revolves above the inner guide (10).

11. Apparatus according to one of Claims 1 to 10, **characterized in that** the at least one clearing arm (5) has the mounting (13) at the front in the running direction at an inner clearing-arm end (22), via which mounting (13) the clearing arm (5) can be connected to the pulling means (4) in a rotatable manner.

12. Apparatus according to Claim 11, **characterized in that** the mounting (13) mounts the clearing arm (5) under gravitational force with lifting play relative to the container base (6).

13. Apparatus according to one of Claims 1 to 12, **characterized in that** the pulling means (4) is a chain which, via a retaining means (18), is designed as a centrally guided chain with deflection and drive motor (19) as a continuous conveyor for the at least one clearing arm (5).

14. Apparatus according to one of Claims 1 to 13, **characterized in that** at least one transport pump is arranged eccentrically.

15. Apparatus according to one of Claims 1 to 14, **characterized in that** at least one transport pump (7) is arranged in the region of a semicircular end piece (9).

16. Apparatus according to Claim 15, **characterized in that** the at least one transport pump (7) is designed as a quick-suctioning immersion pump.

17. Apparatus according to one of Claims 1 to 13, **characterized in that** a connection piece for dry suction is provided as the discharge device.

18. Apparatus according to one of Claims 1 to 17, **characterized in that** the at least one inlet (3) enters above the container base (6) in extension of a longitudinal side.

## Revendications

1. Dispositif pour le convoyage d'un agent de refroidissement-lubrification souillé de résidus solides, en particulier de copeaux, comprenant un récipient présentant au moins une entrée, dans lequel circule au moins un bras de nettoyage (5) agencé sur un organe de traction et conduisant les copeaux qui se trouvent sur un fond plan du récipient vers un dispositif d'évacuation et qui circule sur une trajectoire semblable à un ovale avec des côtés allongés (8) et des extrémités en forme de demi-cercle (9) autour d'un guidage intérieur (10), **caractérisé en ce que** ledit au moins un bras de nettoyage tracté (5) s'appuie par un flanc de bras (12) sur ledit guidage intérieur (10), en tant qu'organe d'engagement monté en rotation, et le flanc de bras (12) présente en aval, dans le sens de circulation, du montage (13), un tronçon (14) en forme d'arc qui est adapté à une courbure des extrémités (15) en forme de demi-cercle du guidage intérieur (10).

2. Dispositif selon la revendication 1, **caractérisé en ce que** ledit au moins un bras de nettoyage (5) est réalisé de manière analogue à une pelle.

3. Dispositif selon la revendication 1 ou 2, **caractérisé en ce qu'**il est prévu plusieurs bras de nettoyage (5) qui circulent à distance les uns des autres.

4. Dispositif selon l'une des revendications 1 à 3, **caractérisé en ce que** les extrémités en forme de demi-cercle (15) du guidage intérieur (10) sont agencées coaxialement aux extrémités en forme de demi-cercle (9) de la trajectoire.

5. Dispositif selon l'une des revendications 1 à 4, **caractérisé en ce que** la trajectoire est délimitée latéralement par la paroi périphérique (11) du récipient (2).

6. Dispositif selon l'une des revendications 1 à 5, **caractérisé en ce que** ledit au moins un bras de nettoyage (5) est réalisé en vue de venir en appui sur une petit surface sur le fond (6) du récipient au niveau de sa face inférieure, par une ou plusieurs barrettes saillantes.

7. Dispositif selon la revendication 6, **caractérisé en ce que** ledit au moins un bras de nettoyage (5) présente sur une face inférieure une barrette agencée en avant dans la direction de circulation.

8. Dispositif selon l'une des revendications 1 à 7, **caractérisé en ce que** ledit au moins un bras de nettoyage (5) comprend une partie en porte-à-faux, et **en ce que** le bras de nettoyage (5) circule par une extrémité extérieure (23) au voisinage d'une paroi périphérique (11) du récipient (2).

9. Dispositif selon l'une des revendications 1 à 8, **caractérisé en ce que** ledit au moins un bras de nettoyage (5) comprend un racleur (21) qui est déplaçable à titre de raclette sur le guidage intérieur (10).

10. Dispositif selon l'une des revendications 1 à 9, **caractérisé en ce que** l'organe de traction (4) circule au-dessus du guidage intérieur (10).

11. Dispositif selon l'une des revendications 1 à 10, **caractérisé en ce que** ledit au moins un bras de nettoyage (5) comporte, en avant en direction de circulation et sur une extrémité intérieure (22) du bras de nettoyage, la monture (13) au moyen de laquelle le bras de nettoyage (5) peut être relié avec possibilité de rotation à l'organe de traction (4).

12. Dispositif selon la revendication 11, **caractérisé en ce que** la monture (13) assure le montage du bras de nettoyage (5) avec un jeu vertical par rapport au fond (6) du récipient sous l'action de la gravité.

13. Dispositif selon l'une des revendications 1 à 12, **caractérisé en ce que** l'organe de traction (4) est une chaîne, laquelle est réalisée via une monture (18) comme une chaîne à guidage central avec renvoi et moteur d'entraînement (19) à titre d'entraînement permanent pour ledit au moins un bras de nettoyage (5).

14. Dispositif selon l'une des revendications 1 à 13, **caractérisé en ce qu'**au moins une pompe de transport est agencée de façon décentrée.

15. Dispositif selon l'une des revendications 1 à 14, **caractérisé en ce qu'**au moins une pompe de transport (7) est agencée dans la zone d'une extrémité (9) en forme de demi-cercle.

16. Dispositif selon la revendication 15, **caractérisé en ce que** ladite au moins une pompe de transport (7) est réalisée sous forme de pompe aspirante immergée.

17. Dispositif selon l'une des revendications 1 à 13, **caractérisé en ce qu'**il est prévu comme dispositif d'extraction une tubulure pour une aspiration à sec.

18. Dispositif selon l'une des revendications 1 à 17, **caractérisé en ce que** ladite au moins une entrée (3) pénètre au-dessus du fond (6) du récipient dans le prolongement d'un côté allongé.
